(19) **Europäisches Patentamt / European Patent Office / Office européen des brevets**

(11) **EP 4 417 671 A1**

(12) **EUROPEAN PATENT APPLICATION**
published in accordance with Art. 153(4) EPC

(43) Date of publication:
**21.08.2024 Bulletin 2024/34**

(21) Application number: **22880624.6**

(22) Date of filing: **10.08.2022**

(51) International Patent Classification (IPC):
**C09K 11/08** (2006.01)     **C09K 11/61** (2006.01)
**C09K 11/66** (2006.01)     **C09K 11/67** (2006.01)

(52) Cooperative Patent Classification (CPC):
**C09K 11/08; C09K 11/61; C09K 11/66;
C09K 11/67;** Y02B 20/00

(86) International application number:
**PCT/JP2022/030651**

(87) International publication number:
**WO 2023/062927 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.10.2021 JP 2021168440**

(71) Applicant: **Stella Chemifa Corporation**
**Osaka-shi, Osaka 541-0044 (JP)**

(72) Inventors:
• **HORIGAMI, Kenta**
**Izumiotsu-shi, Osaka 595-0075 (JP)**

• **TAKATORI, Hiroaki**
**Izumiotsu-shi, Osaka 595-0075 (JP)**
• **KUMAZAWA, Shinya**
**Izumiotsu-shi, Osaka 595-0075 (JP)**
• **HIRANO, Kazutaka**
**Izumiotsu-shi, Osaka 595-0075 (JP)**
• **ARAKAWA,Tetsuya**
**Izumiotsu-shi, Osaka 595-0075 (JP)**
• **NISHIDA, Tetsuo**
**Izumiotsu-shi, Osaka 595-0075 (JP)**
• **KITAHARA, Yusuke**
**Izumiotsu-shi, Osaka 595-0075 (JP)**

(74) Representative: **Meissner Bolte Partnerschaft
mbB**
**Patentanwälte Rechtsanwälte**
**Postfach 86 06 24**
**81633 München (DE)**

(54) **RED FLUORESCENT SUBSTANCE AND PRODUCTION METHOD THEREFOR**

(57)     A red phosphor excellent in optical characteristics and durability in a high-temperature and high-humidity environment and a method for producing the same are provided. The red phosphor according to the present invention includes: a Mn-activated composite fluoride represented by a general formula (1); and a perovskite compound represented by a general formula (2): $L_2MF_6$:$Mn^{4+}$ (1) where L represents at least one alkali metal element selected from a group consisting of sodium, potassium, etc., and M represents at least one tetravalent element selected from a group consisting of silicon, germanium, etc.; and $ABX_3$ (2) where A represents at least one selected from a group consisting of sodium, potassium, etc., B represents at least one element selected from a group consisting of magnesium, calcium, etc., and X represents at least one element selected from a group consisting of fluorine, chlorine, bromine, iodine, and sulfur.

Figure 4

**Description**

TECHNICAL FIELD

The present invention relates to a red phosphor that is excited by an excitation light such as ultraviolet light and blue light to emit red light, and a method for producing the same. More specifically, the present invention relates to: a red phosphor excellent in optical characteristics and durability in a high-temperature and high-humidity environment, the red phosphor containing a Mn (manganese)-activated composite fluoride and a perovskite compound and having the perovskite compound on the surface of, or in the inner part of the Mn-activated composite fluoride; and a method for producing the same.

BACKGROUND ART

White LEDs (light emitting diodes) have a longer life and lower power consumption than fluorescent lamps. Therefore, it has rapidly become widespread as a backlight for lighting equipment and displays. The white LED of a commercially available lighting equipment is composed of a combination of a blue LED which emits near-ultraviolet light to blue light, and a yellow phosphor which is excited by the light. As a result, the white LED enables the irradiation of pseudo-white light by mixing the light emitted by the blue LED and the light emitted by the yellow phosphor.

However, since the pseudo-white light emitted by the white LED contains little or no light emitting component in the red light region, the pseudo-white light has a problem that color rendering properties (which mean properties of how colors appears under the illumination when the object is visually recognized as compared with natural light (or sunlight, black body radiation). For example, when the object is illuminated by lighting and the colors appear similar to those when illuminated by natural light, it exhibits high color rendering properties)) are inferior as compared with natural light.

Therefore, there is a need for a red phosphor which is excited by ultraviolet light emitted by a near-ultraviolet LED or blue light emitted by a blue LED to emit red light. There has recently been developed, as such a red phosphor, a phosphor composition composed of Mn-activated complex fluoride ($K_2SiF_6:Mn^{4+}$ (KSF:Mn)) which emits red light centered on transition metal $Mn^{4+}$ ions (see, for example, Patent Documents 1 and 2, and Non-Patent Document 1), and its adoption is rapidly advancing. KSF:Mn has an excitation band at the wavelength of blue light, and has a red emission peak with a narrow half-value width in a narrow band of 600 to 650 nm.

In KSF:Mn, $K_2SiF_6$ crystals act as the framework of the phosphor, and $Mn^{4+}$ ions are solid-soluted at the $Si^{4+}$ position of the hexacoordinate-octahedral site formed by $SiF_6^{2-}$ ions to form an $MnF_6^{2-}$ octahedral site, thus acting as a luminescent center.

However, it has been pointed out that this red phosphor composed of KSF:Mn has a practical problem that the particle surface is darkened when it comes into contact with water, water vapor or the like under high-temperature and high-humidity environments. Specifically, manganese dioxide is generated by reacting tetravalent manganese ions constituting the red phosphor with water on the particle surface of the red phosphor, and this manganese dioxide causes absorption of excitation light and suppression of fluorescence, leading to deterioration of optical properties and deterioration of optical properties with time (degradation of durability).

PRIOR ART DOCUMENTS

PATENT DOCUMENTS

[0007]

　　Patent Document 1: JP 2009- 528 429 A
　　Patent Document 2: WO2015/093430 A1
　　Patent Document 3: JP 2018- 12 813 A
　　Patent Document 4: JP 2017- 141 447 A

NON-PATENT DOCUMENTS

[0008]

　　Non-Patent Document 1: H. D. Nguyen, C. C. Lin, R. S. Liu, Angew. Chem. Volume 54, 37, p. 10862(2015)
　　Non-Patent Document 2: RAJAMANI NAGARAJAN, Bull. Mater. Sci., Vol. 32, No. 6, December 2009, pp.583-587

## SUMMARY OF THE INVENTION

## PROBLEMS TO BE SOLVED BY THE INVENTION

The present invention has been made in view of the above problems, and an object thereof is to provide a red phosphor having excellent optical characteristics and durability under high-temperature and high-humidity environments, and a method for producing the same.

## SOLUTIONS TO THE PROBLEMS

In order to solve the above problems, the red phosphor according to the present invention comprises: a Mn-activated composite fluoride represented by a general formula (1) below; and a perovskite compound represented by a general formula (2) below:

$$L_2MF_6: Mn^{4+} \cdots \qquad (1)$$

where L represents at least one alkali metal element selected from a group consisting of lithium, sodium, potassium, rubidium, and cesium, and M represents at least one tetravalent element selected from a group consisting of silicon, germanium, tin, titanium, zirconium, and hafnium; and

$$ABX_3 \qquad (2)$$

where A represents at least one selected from a group consisting of lithium, sodium, potassium, rubidium, cesium, silver, indium, gold, thallium, ammonium, primary ammonium, secondary ammonium, tertiary ammonium, and quaternary ammonium, the primary ammonium, the secondary ammonium, the tertiary ammonium, and the quaternary ammonium have an alkyl group having 1 to 10 carbon atoms or an alkyl group having 1 to 10 carbon atoms and having a hetero atom, B represents at least one element selected from a group consisting of magnesium, calcium, barium, zinc, zirconium, strontium, manganese, iron, cobalt, nickel, copper, titanium, vanadium, chromium, mercury, cadmium, tin, lead, strontium, europium, yttrium, beryllium, indium, aluminum, ruthenium, osmium, and antimony, and X represents at least one element selected from a group consisting of fluorine, chlorine, bromine, iodine, and sulfur.

In the configuration, the perovskite compound represented by the general formula (2) may adhere to at least a part of a surface of the Mn-activated composite fluoride represented by the general formula (1) and/or may be present in an inner part of the Mn-activated composite fluoride represented by the general formula (1).

In the configuration, the Mn-activated composite fluoride represented by the general formula (1) may adhere to at least a part of a surface of the perovskite compound represented by the general formula (2) and/or may be present in an inner part of the perovskite compound represented by the general formula (2).

In the configuration, the perovskite compound represented by the general formula (2) preferably has an average particle size D50 of 0.002 $\mu$m to 20 $\mu$m in a laser diffraction scattering method.

In the configuration, the Mn-activated composite fluoride represented by the general formula (1) and the perovskite compound represented by the general formula (2) are preferably contained in a content ratio of 10 : 90 to 99.999 : 0.001 on a mass basis.

In the configuration, it is preferable to include a step of contacting a Mn-activated composite fluoride represented by a general formula (1) below and a perovskite compound represented by a general formula (2) below with each other in a presence of a solvent.

In order to solve the above problems, the method for producing a red phosphor according to the present invention comprises a step of contacting a Mn-activated composite fluoride represented by a general formula (1) below and a perovskite compound represented by a general formula (2) below with each other in a presence of a solvent:

$$L_2MF_6: Mn^{4+} \cdots \qquad (1)$$

where L represents at least one alkali metal element selected from a group consisting of lithium, sodium, potassium, rubidium, and cesium, and M represents at least one tetravalent element selected from a group consisting of silicon, germanium, tin, titanium, zirconium, and hafnium; and

$$ABX \cdots \qquad (2)$$

where A represents at least one selected from a group consisting of lithium, sodium, potassium, rubidium, cesium, silver, indium, gold, thallium, ammonium, primary ammonium, secondary ammonium, tertiary ammonium, and quaternary ammonium, the primary ammonium, the secondary ammonium, the tertiary ammonium, and the quaternary ammonium have an alkyl group having 1 to 10 carbon atoms or an alkyl group having 1 to 10 carbon atoms and having a hetero atom, B represents at least one element selected from a group consisting of magnesium, calcium, barium, zinc, zirconium, strontium, manganese, iron, cobalt, nickel, copper, titanium, vanadium, chromium, mercury, cadmium, tin, lead, strontium, europium, yttrium, beryllium, indium, aluminum, ruthenium, osmium, and antimony, and X represents at least one element selected from a group consisting of fluorine, chlorine, bromine, iodine, and sulfur.

In the configuration, the perovskite compound represented by the general formula (2) preferably has an average particle size D50 of 0.002 $\mu$m to 20 $\mu$m in a laser diffraction scattering method.

In the configuration, in the red phosphor obtained by contacting the Mn-activated composite fluoride represented by the general formula (1) and the perovskite compound represented by the general formula (2) with each other, the Mn-activated composite fluoride and the perovskite compound are preferably contained in a content ratio of 10 : 90 to 99.999 : 0.001 on a mass basis.

In the configuration, the solvent is preferably water, an organic solvent, a mixed solvent thereof, or an acidic solvent thereof.

In the configuration, it is preferable that a mixing ratio of the solvent to the Mn-activated composite fluoride represented by the general formula (1) and the perovskite compound represented by the general formula (2) is in a range of 2 : 1 to 100 : 1 on a mass basis.

In the configuration, preferably, the acidic solvent is an acidic solvent containing hydrogen fluoride, and the acidic solvent containing the hydrogen fluoride has a concentration of the hydrogen fluoride of 1 mass% to 70 mass% with respect to a total mass of the acidic solvent.

EFFECTS OF THE INVENTION

The present invention provides the following effects by the means described above.

That is, according to the red phosphor of the present invention, a Mn-activated composite fluoride and a perovskite compound are present therein, thereby reducing or preventing the formation of colored manganese dioxide through a reaction between $Mn^{4+}$ and water. As a result, it is possible to prevent the case where manganese dioxide absorbs excitation light and fluorescent light or the case where excitation light is absorbed and thereby fluorescence emission is decreased.

Therefore, it is possible to provide a red phosphor that has good optical characteristics, reduces the decrease in optical characteristics due to the temporal change in a high-temperature and high-humidity environment, and has excellent durability.

Further, the method for producing a red phosphor of the present invention makes it possible to produce a red phosphor having a Mn-activated composite fluoride and a perovskite compound by contacting a treatment liquid containing a perovskite compound to a Mn-activated composite fluoride. As a result, it is possible to produce a red phosphor that has good optical characteristics, reduces the decrease in optical characteristics due to the temporal change in a high-temperature and high-humidity environment, and has excellent durability.

BRIEF DESCRIPTION OF THE DRAWINGS

FIG. 1 is a graph showing an X-ray diffraction pattern of $KMgF_3$ according to Example 1 of the present invention.
FIG. 2 is a SEM photograph of $KMgF_3$ according to Example 1 of the present invention.
FIG. 3 is a graph showing an X-ray diffraction pattern of a red phosphor according to Example 1 of the present invention.
FIG. 4 is a SEM photograph of a red phosphor according to Example 1 of the present invention.

EMBODIMENTS OF THE INVENTION

Red phosphor

The red phosphor according to the present embodiment will be described below.

The red phosphor according to the present embodiment contains a Mn-activated composite fluoride (hereinafter, sometimes referred to as "Mn-activated composite fluoride") represented by the following general formula (1) and a perovskite compound (hereinafter, sometimes referred to as "perovskite compound") represented by the following general formula (2) below:

$$L_2MF_6: Mn^{4+} \cdots \qquad (1)$$

where L represents at least one alkali metal element selected from a group consisting of lithium, sodium, potassium, rubidium, and cesium, and M represents at least one tetravalent element selected from a group consisting of silicon, germanium, tin, titanium, zirconium, and hafnium; and

$$ABX_3 \qquad (2)$$

where A represents at least one selected from a group consisting of lithium, sodium, potassium, rubidium, cesium, silver, indium, gold, thallium, ammonium, primary ammonium, secondary ammonium, tertiary ammonium, and quaternary ammonium, the primary ammonium, the secondary ammonium, the tertiary ammonium, and the quaternary ammonium have an alkyl group having 1 to 10 carbon atoms or an alkyl group having 1 to 10 carbon atoms and having a hetero atom, B represents at least one element selected from a group consisting of magnesium, calcium, barium, zinc, zirconium, strontium, manganese, iron, cobalt, nickel, copper, titanium, vanadium, chromium, mercury, cadmium, tin, lead, strontium, europium, yttrium, beryllium, indium, aluminum, ruthenium, osmium, and antimony, and X represents at least one element selected from a group consisting of fluorine, chlorine, bromine, iodine, and sulfur.

The red phosphor of the present embodiment may be a single red phosphor, or a mixture of two or more red phosphors.

In the general formula $A_2MF_6:Mn^{4+}$ which represents the Mn-activated compound fluoride, "$A_2MF_6$" represents the composition of a host crystal of the red phosphor. Further, "$Mn^{4+}$" represents an activated ion which is the center of the luminescent.

In the present specification, the term "activation" means the addition of $Mn^{4+}$, which is an activator, to $A_2MF_6$, which is a host crystal, in order to express fluorescence. Examples of the activated form include a form in which $Mn^{4+}$ is partially substituted with an arbitrary atom constituting $A_2MF_6$. In case of the present embodiment, it is preferable that $Mn^{4+}$ is substituted with M of the host crystal.

Specific examples of the Mn-activated complex fluoride represented by the general formula $A_2MF_6:Mn^{4+}$ include $Li_2SiF_6:Mn^{4+}$, $Na_2SiF_6:Mn^{4+}$, $K_2SiF_6:Mn^{4+}$, $Rb_2SiF_6:Mn^{4+}$, $Cs_2SiF_6:Mn^{4+}$, $Li_2GeF_6:Mn^{4+}$, $Na_2GeF_6:Mn^{4+}$, $K_2GeF_6:Mn^{4+}$, $Rb_2GeF_6:Mn^{4+}$, $Cs_2GeF_6:Mn^{4+}$, $Li_2SnF_6:Mn^{4+}$, $Na_2SnF_6:Mn^{4+}$, $K_2SnF_6:Mn^{4+}$, $Rb_2SnF_6:Mn^{4+}$, $Cs_2SnF_6:Mn^{4+}$, $Li_2TiF_6:Mn^{4+}$, $Na_2TiF_6:Mn^{4+}$, $K_2TiF_6:Mn^{4+}$, $Rb_2TiF_6:Mn^{4+}$, $Cs_2TiF_6:Mn^{4+}$, $Li_2ZrF_6:Mn^{4+}$, $Na_2ZrF_6:Mn^{4+}$, $K_2ZrF_6:Mn^{4+}$, $Rb_2ZrF_6:Mn^{4+}$, $Cs_2ZrF_6:Mn^{4+}$, $Li_2HfF_6:Mn^{4+}$, $Na_2HfF_6:Mn^{4+}$, $K_2HfF_6:Mn^{4+}$, $Rb_2HfF_6:Mn^{4+}$, $Cs_2HfF_6:Mn^{4+}$ and the like. Of these Mn-activated complex fluoride, $K_2SiF_6:Mn^{4+}$, $K_2TiF_6:Mn^{4+}$, $K_2GeF_6:Mn^{4+}$, $Na_2SiF_6:Mn^{4+}$, $Na_2TiF_6:Mn^{4+}$ and $Na_2GeF_6:Mn^{4+}$ are preferable, and $K_2SiF_6:Mn^{4+}$ and $K_2TiF_6:Mn^{4+}$ are more preferable, from the viewpoint of ease of availability and ease of synthesis. The Mn-activated complex fluoride can be selected according to the optical properties required for various applications. Therefore, it is not particularly limited to the exemplified Mn-activated complex fluorides.

In the present specification, the term "optical properties" mean absorptivity and internal quantum efficiency of the red phosphor, and the like. The term "absorptivity" means efficiency with which the red phosphor absorbs excitation light. For example, when a peak value of a spectral radiance of excitation light (wavelength: 449 nm) emitted from a blue LED is Ex1 and a peak value of excitation light which is not absorbed by the red phosphor is Ex2, an absorptivity $\alpha$ is calculated by the following mathematical formula (1).

$$\text{Absorptivity } \alpha(\%) = (Ex1 - Ex2)/Ex1 \times 100 \qquad \ldots(1)$$

The term "internal quantum efficiency" means that efficiency of converting excitation light absorbed by the red phosphor into fluorescence. For example, when a peak value of a spectral radiance of the fluorescence of the red phosphor is Ex2 under irradiation with excitation light (wavelength: 449 nm) from a blue LED, an internal quantum efficiency $\eta$ is represented by the following mathematical formula (2).

$$\text{Internal quantum efficiency } \eta(\%) = Em/(Ex1 - Ex2) \times 100 \qquad \ldots(2)$$

The Mn-activated complex fluoride is solid, and preferably particulate. When the Mn-activated complex fluoride is particulate, an average particle size thereof is not particularly limited as long as the ratio of scattering to excitation light does not increase excessively as compared with absorption and conversion, and any inconvenience does not occur when mixing with a resin so as to be mounted on an LED device.

The molar ratio of Mn is preferably in the range of 0.005 to 0.15, more preferably in the range of 0.01 to 0.12, and particularly preferably in the range of 0.02 to 0.1, with respect to the total molar number of M and Mn in the red phosphor (or the Mn-activated composite fluoride). With the molar ratio of 0.005 or more, the red phosphor can maintain a favorable emission intensity. On the other hand, with the molar ratio of 0.15 or less, it is possible that the red phosphor does not have excessively low durability in a high-temperature and high-humidity environment.

As used herein, the term "durability" means the degree to which initial optical properties of the red phosphor are maintained when the red phosphor is stored for a certain period of time under high-temperature and high-humidity environments. The meaning of the optical properties is as mentioned above.

Specific examples of the perovskite compound represented by the general formula $ABX_3$ include $LiBaF_3$, $LiMgF_3$, $LiMnF_3$, $LiFeF_3$, $LiCoF_3$, $LiNiF_3$, $LiCuF_3$, $NaCaF_3$, $NaMgF_3$, $NaZnF_3$, $NaZrF_3$, $NaMnF_3$, $NaFeF_3$, $NaCoF_3$, $NaNiF_3$, $NaCuF_3$, $NaTiF_3$, $NaSnF_3$, $NaBeF_3$, $KCaF_3$, $KBaF_3$, $KMgF_3$, $KZnF_3$, $KZrF_3$, $KMnF_3$, $KFeF_3$, $KCoF_3$, $KNiF_3$, $KCuF_3$, $KTiF_3$, $KHgF_3$, $KCdF_3$, $KSnF_3$, $KPbF_3$, $KSrF_3$, $RbCaF_3$, $RbBaF_3$, $RbMgF_3$, $RbZnF_3$, $RbZrF_3$, $RbFeF_3$, $RbNiF_3$, $RbTiF_3$, $RbHgF_3$, $RbCdF_3$, $RbSnF_3$, $RbPbF_3$, $RbSrF_3$, $CsCaF_3$, $CsBaF_3$, $CsZnF_3$, $CsZrF_3$, $CsFeF_3$, $CsCuF_3$, $CsTiF_3$, $CsVF_3$, $CsCrF_3$, $CsHgF_3$, $CsCdF_3$, $CsSrF_3$, $InCaF_3$, $InMgF_3$, $InZnF_3$, $InCdF_3$, $InOsF_3$, $AuBaF_3$, $AuMgF_3$, $AuZnF_3$, $TlCaF_3$, $TlMgF_3$, $TlZnF_3$, $TlZrF_3$, $TlNiF_3$, $TlTiF_3$, $TlVF_3$, $TlHgF_3$, $TlCdF_3$, $TlSnF_3$, $TlPbF_3$, $TlOsF_3$, $AgMgF_3$, $AgZnF_3$, $AgZrF_3$, $AgFeF_3$, $AgTiF_3$, $AgVF_3$, $AgCrF_3$, $AgCdF_3$, $XeScF_3$, $HgScF_3$, $HgYF_3$, $HgInF_3$, $GaMgF_3$, $GaZnF_3$, $GaRuF_3$, $ZnScF_3$, $ZnYF_3$, $ZnInF_3$, $ZnAlF_3$, $CdScF_3$, $CdYF_3$, $CdSbF_3$, $BaCuF_3$, $AlMgF_3$, $AlZnF_3$, $AlFeF_3$, $BeScF_3$, $BeYF_3$, $BeAlF_3$, $PdScF_3$, $PdYF_3$, $NH_4MgF_3$, $NaMgCl_3$, $KMgCl_3$, $RbMgCl_3$, $CsMgCl_3$, $InMgCl_3$, $NaZnCl_3$, $KZnCl_3$, $RbZnCl_3$, $InZnCl_3$, $RbHgCl_3$, $RbTiCl_3$, $TlCaCl_3$, $TlHgCl_3$, $RbCaBr_3$, $CsCaBr_3$, $TlCaBr_3$, $RbHgBr_3$, $CsEuBr_3$, $CsCaI_3$, $CsHgI_3$, $CaZrS_3$, and $BaZrS_3$. Among these perovskite compounds, from the viewpoint of easiness in availability and synthesis, $NaCaF_3$, $KCaF_3$, $NaFeF_3$, $KFeF_3$, $NaNiF_3$, $KNiF_3$, $NaZnF_3$, $NaZrF_3$, $KZnF_3$, $KZrF_3$, $NaMgF_3$, and $KMgF_3$ are preferable, and $NaMgF_3$ and $KMgF_3$ are more preferable.

When A in the general formula (2) is primary ammonium, secondary ammonium, tertiary ammonium, or quaternary ammonium, A has an alkyl group having 1 to 10 carbon atoms, preferably 1 to 6 carbon atoms, and more preferably 1 to 5 carbon atoms. Alternatively, A has an alkyl group having 1 to 10 carbon atoms, preferably 1 to 6 carbon atoms, and more preferably 1 to 5 carbon atoms and having a hetero atom. In the present specification, the term "hetero atom" means an atom such as oxygen, nitrogen, and sulfur. In addition, when the present specification shows a carbon number range, the range includes all the integer carbon numbers included in the range. Therefore, for example, an alkyl group having "1 to 3 carbon atoms" means all alkyl groups having 1, 2, and 3 carbon atoms.

Here, when M in the Mn-activated composite fluoride is any of silicon, germanium, tin, titanium, and zirconium, in a preferable combination, B in the perovskite compound is any of magnesium, calcium, zinc, iron, nickel, and titanium. Further, when M in the Mn-activated composite fluoride is silicon, B in the perovskite compound is more preferably magnesium.

The perovskite compound can be selected according to the durability required for various applications. Therefore, the perovskite compound is not particularly limited to the exemplified perovskite compounds.

The Mn-activated composite fluoride and the perovskite compound are preferably contained in a content ratio of 10 : 90 to 99.999 : 0.001, more preferably 10 : 90 to 99.99 : 0.01, and particularly preferably 15 : 85 to 99.97 : 0.03, on a mass basis. When the Mn-activated composite fluoride and the perovskite compound are contained in a content ratio of 10 : 90 or more, the red phosphor can maintain good optical characteristics.

On the other hand, when the Mn-activated composite fluoride and the perovskite compound are contained in a content ratio of 99.999 : 0.001 or less, the red phosphor can be provided with further improved optical characteristics and durability in a high-temperature and high-humidity environment.

The (initial) absorptivity of the red phosphor is preferably in the range of 30 % to 100 %, more preferably in the range of 40 % to 100 %, and still more preferably in the range of 50 % to 100 %. With the absorptivity of 30 % or more, the red phosphor can maintain good optical characteristics. In particular, in the present invention, the red phosphor does not reduce its excitation light absorption even after stored in a high-temperature and high-humidity environment for a certain period of time, and therefore the red phosphor can maintain good optical characteristics.

The numerical range of the absorptivity is applied not only to the initial absorptivity of the red phosphor but also to the absorptivity after the red phosphor is stored in a high-temperature and high-humidity environment for a certain period of time. The definition of the absorptivity is as described above.

The (initial) internal quantum efficiency of the red phosphor is preferably in the range of 60 % to 100 %, more preferably in the range of 75 % to 100 %, and still more preferably in the range of 80 % to 100 %. With the internal quantum efficiency of 70 % or more, the red phosphor can maintain a good emission efficiency. The numerical range of the internal quantum efficiency is applied not only to the initial internal quantum efficiency of the red phosphor but also to the internal quantum efficiency after the red phosphor is stored in a high-temperature and high-humidity environment for a certain period of time. The definition of the internal quantum efficiency is as described above.

In the red phosphor of the present embodiment, the Mn-activated composite fluoride and the perovskite compound can be present in various forms.

For example, the perovskite compound can be present on at least a part of the surface of the Mn-activated composite fluoride. It is considered that the Mn-activated composite fluoride produces colored manganese dioxide through a reaction between the constituent tetravalent manganese ions and water, thereby generating blackhead on the Mn-activated composite fluoride.

Presumably, the blackhead is accelerated to occur in a high-temperature and high-humidity, and the red phosphor has deteriorated optical characteristics and decreased durability. However, the perovskite compound is present on at least a part of the surface of the Mn-activated composite fluoride, which can reduce or prevent the contact and reaction between the tetravalent manganese ions and water.

In particular, when the entire surface of the Mn-activated composite fluoride is covered with the perovskite compound and the perovskite compound is present as a cover layer, moisture and water vapor are less likely to permeate into the red phosphor and thereby durability in a high-temperature and high-humidity environment and optical characteristics can be improved.

From the viewpoint of preventing the production of manganese dioxide, the perovskite compound is preferably present as a cover layer over the entire surface of the Mn-activated composite fluoride. However, it is sometimes industrially unsuitable that the perovskite compound covers the entire surface of the Mn-activated composite fluoride from the viewpoint of production cost and production easiness.

According to the results of intensive studies by the present inventors, durability in a high-temperature and high-humidity environment and optical characteristics can be improved even when the perovskite compound is present on a part of the surface of the Mn-activated composite fluoride. Therefore, it has been found that the surface of the Mn-activated composite fluoride does not have to be entirely covered. The reason for this has not yet been clarified, but this is presumably because the production process of the red phosphor of the present invention undergoes the three-phase interface formed of the perovskite compound, the Mn-activated composite fluoride, and the reaction liquid/treatment liquid, which is formed on the surface of the red phosphor.

That is, when the reaction liquid/treatment liquid is distilled off, there is a possibility that a very small amount of the perovskite compound present therein is deposited very thinly, for example, at the molecular level, on the outermost surface layer of the Mn-activated composite fluoride. Furthermore, in a severe environment such as high-temperature and high-humidity, the adsorption layer of water molecules on the surface of the Mn-activated composite fluoride can be regarded as a reaction liquid/treatment liquid.

The perovskite compound present on a part of the surface of the Mn-activated composite fluoride presumably serves as a reservoir thereof. Therefore, it is considered that durability in a high-temperature and high-humidity environment is improved without covering the entire surface of the Mn-activated composite fluoride.

The perovskite compound may be present in the inner part of the Mn-activated composite fluoride. As a result, the perovskite compound present in the inner part induces excitation light scattering to increase the chance of contact with $Mn^{4+}$ ions, and contributes to improving the optical characteristics, especially, absorptivity.

The Mn-activated composite fluoride may be present on at least a part of the surface of the perovskite compound. The existence form contains the perovskite compound, which causes no optical defect, thereby reducing the amount of the Mn-activated composite fluoride, which contains $Mn^{4+}$ as the light-emitting ion of the red phosphor, and contributing cost reduction of phosphor raw materials to be used for light-emitting devices such as LEDs, lighting fixtures, and image display devices, for example.

The Mn-activated composite fluoride may be present in the inner part of the perovskite compound. Accordingly, it is possible to prevent the contact between tetravalent manganese ions and water or water vapor, and further prevent generation of manganese dioxide. As a result, the red phosphor can be provided with further improved durability in a high-temperature and high-humidity environment.

The red phosphor of the present embodiment is solid, and preferably particulate. When the red phosphor is particulate, the average particle size thereof is not particularly limited as long as excitation light is not scattered in an excessively high ratio compared with absorption and conversion and the particulate red phosphor does not have inconvenience when mixed with a resin for mounting on an LED device.

The red phosphor of the present embodiment is suitable as, for example, a red phosphor for a white LED using blue light as a light source. The red phosphor of the present embodiment can be suitably used for a light emitting device such as lighting equipment and an image display device.

Method for producing red phosphor

Next, the method for producing a red phosphor according to the present embodiment will be described below.

One aspect of the method for producing a red phosphor according to the present embodiment is, for example, a method including at least a step of contacting a Mn-activated composite fluoride and a perovskite compound with each other in the presence of a solvent. The method can produce a red phosphor in which the perovskite compound is present on at least a part of the surface of the Mn-activated composite fluoride, or a red phosphor in which the Mn-activated composite fluoride is present on at least a part of the surface of the perovskite compound.

Examples of the solvent include water, an organic solvent, a mixed solvent thereof, or an acidic solvent thereof. Among these solvents, those that completely dissolve the Mn-activated composite fluoride may considerably reduce the yield of the red phosphor. Accordingly, from the viewpoint of improving productivity, a solvent that does not completely dissolve the Mn-activated composite fluoride is preferably selected.

Among such solvents, examples of the organic solvent include methyl alcohol, ethyl alcohol, isopropyl alcohol, isobutyl alcohol, acetone, methyl acetate, ethyl acetate, tetrahydrofuran, and 1,2-dimethoxyethane. Among these organic solvents, methyl alcohol, ethyl alcohol, isopropyl alcohol, isobutyl alcohol, and acetone are preferable, and ethyl alcohol, isopropyl alcohol, and acetone are particularly preferable from the viewpoint of easiness in availability and convenience in working environment.

Among such solvents, examples of the acidic solvent (that is, a solvent containing an acid having a proton) include hydrogen fluoride, nitric acid, sulfuric acid, hydrochloric acid, and silicofluoric acid. From the viewpoint of the production process and the characteristics of the red phosphor, hydrogen fluoride, nitric acid, and silicofluoric acid are preferable, and hydrogen fluoride is particularly preferable.

The addition amount of the perovskite compound is preferably appropriately set so that the red phosphor obtained by the production method of the present embodiment has the following content ratio between the Mn-activated composite fluoride and the perovskite compound.

That is, the Mn-activated composite fluoride and the perovskite compound are preferably contained in a content ratio of 10 : 90 to 99.999 : 0.001, more preferably
10 : 90 to 99.99 : 0.01, and particularly preferably 15 : 85 to 99.97 : 0.03, on a mass basis. When the Mn-activated composite fluoride and the perovskite compound are contained in the content ratio of 99.999 : 0.001 or less, the red phosphor maintains good optical characteristics. On the other hand, when the Mn-activated composite fluoride and the perovskite compound are contained in the content ratio of 10 : 90 or more, the red phosphor has a further improved optical characteristics and durability in a high-temperature and high-humidity environment.

The mixing ratio of the solvent to the Mn-activated composite fluoride and the perovskite compound can be appropriately adjusted as long as the subsequently performed stirring and filtration are not affected (The details of the stirring and filtration will be described below.). Specifically, the mixing ratio of the two is preferably in the range of 2 : 1 to 100 : 1, more preferably in the range of 3 : 1 to 50 : 1, and particularly preferably in the range of 3 : 1 to 10 : 1, on a mass basis. With the mixing ratio of 100 : 1 or less, the amount of the solvent discharged as a waste liquid can be reduced, and the environmental load can be reduced. On the other hand, with the mixing ratio of 2 : 1 or more, the Mn-activated composite fluoride and the perovskite compound have an improved dispersibility in the solvent, and therefore it is possible to prevent a case where the Mn-activated composite fluoride and the perovskite compound are nonuniformly present.

When an acidic solvent containing hydrogen fluoride, that is, hydrofluoric acid or a mixed solvent of the hydrofluoric acid and an organic solvent is used as the solvent, the concentration of the hydrogen fluoride is preferably in a range of 1 mass% to 70 mass%, more preferably in a range of 5 mass% to 60 mass%, and particularly preferably in a range of 10 mass% to 50 mass%, with respect to the total mass of the acidic solvent.

With the hydrogen fluoride concentration of 70 mass% or less, it is possible to lower the solubility of the Mn-activated composite fluoride in the acidic solvent containing the hydrogen fluoride and suppress the decrease in the yield of the red phosphor. On the other hand, with the hydrogen fluoride concentration of 1 mass% or more, it is possible to suppress the increase in the amount of the acidic solvent to be used and improve productivity.

The method of contacting the Mn-activated composite fluoride and the perovskite compound with each other in the presence of a solvent is not particularly limited, and examples thereof include a dipping (charging, adding) method and a spraying method. For example, the former includes charging (dipping) the Mn-activated composite fluoride and the perovskite compound to the solvent in an arbitrary order or simultaneously.

As a result, a suspension in which the Mn-activated composite fluoride and the perovskite compound are dispersed in the solvent is obtained. The number of times of charging is not particularly limited. The Mn-activated composite fluoride and the perovskite compound may be charged in the solvent at a time, and may be charged in installments. For example, the latter includes spraying a solvent added with the perovskite compound to the Mn-activated composite fluoride. The spray amount of the solvent containing the perovskite compound is not particularly limited, and can be appropriately set.

After the solvent containing the perovskite compound is sprayed to the Mn-activated composite fluoride, the solvent remaining on the surface of the Mn-activated composite fluoride is preferably distilled off. The method of distillation is not particularly limited, and for example, the drying step described later can be performed. From the viewpoint of industrially producing the red phosphor, a method of charging (dipping) the Mn-activated composite fluoride and the perovskite compound to the solvent is preferable.

When the step of contacting the Mn-activated composite fluoride with the perovskite compound is performed by the dipping method, it is preferable to sequentially perform, after the contacting step, a stirring step of stirring the obtained suspension, a solid-liquid separation step of the suspension, a washing step of the solid separated in the solid-liquid separation, and a drying step of the washed solid.

The stirring method in the stirring step is not particularly limited, and the stirring can be performed using a known stirring apparatus or the like. The stirring time of the suspension is not particularly limited, and can be appropriately adjusted based on the efficiency of the production facility. The stirring speed is also not particularly limited, and can be appropriately set as necessary.

The solid-liquid separation step is a step of separating dispersed solid particles from the suspension after the stirring step. The method for solid-liquid separation is not particularly limited, and examples thereof include a method in which the suspension is filtered, and a method in which the suspension is left standing or centrifuged to precipitate the dispersed solid particles, followed by decantation. The standing time of the suspension and the rotation speed and the time of the centrifugal separation are not particularly limited as long as the solid particles can be sufficiently precipitated.

The washing step is performed to wash the cake obtained by solid-liquid separation. In this washing step, water, an organic solvent, a mixed solvent thereof, or an acidic solvent thereof can be used as a washing agent. The washing time and the number of washings are not particularly limited and can be set as needed.

Examples of the organic solvent used in the washing step include, but are not particularly limited to, methyl alcohol, ethyl alcohol, isopropyl alcohol, isobutyl alcohol, acetone, methyl acetate, ethyl acetate, tetrahydrofuran, 1,2-dimethoxyethane and the like. From the viewpoint of ease of availability and simplicity of working environment, methyl alcohol, ethyl alcohol, isopropyl alcohol, isobutyl alcohol and acetone are preferable, and ethyl alcohol, isopropyl alcohol and acetone are particularly preferable.

The acidic solvent used in the washing step means a solution containing a proton-containing acid. Examples of the proton-containing acid include, but are not particularly limited to, hydrogen fluoride, nitric acid, sulfuric acid, hydrochloric acid and the like. The content of the proton-containing acid is preferably in a range of 0.1 % by mass to 70 % by mass, more preferably 1 % by mass to 55 % by mass, and particularly preferably 5 % by mass to 50 % by mass, with respect to the total mass of the acidic solvent.

The cake after the washing step is subjected to the drying step. Thereby, it is possible to distill off the solvent component remaining on the cake and the washing agent used in the washing step. Examples of the drying method include, but are not particularly limited to, heat-drying and hot-air drying. Heat-drying is preferably performed under an atmosphere of nitrogen gas. The drying temperature is preferably in a range of 60 °C to 200 °C, more preferably 70 °C to 150 °C, and particularly preferably 80 °C to 110 °C.

By setting the drying temperature at 60 °C or higher, the drying efficiency can be satisfactorily maintained. It is also possible to prevent the residual impurities and suppress deterioration of the optical properties of the red phosphor due to the residual impurities. Meanwhile, by setting the drying temperature at 200 °C or lower, it is possible to prevent the obtained red phosphor from being degraded by heat. In case of heat-drying, the drying time is preferably in a range of 0.5 hour to 20 hours, and more preferably 2 hours to 15 hours.

By setting the drying time at 0.5 hour or more, it is possible to prevent impurities from remaining and to suppress deterioration of the optical properties of the red phosphor due to the residual impurities. Meanwhile, by setting the drying time to 20 hours or less, it is possible to prevent a decrease in production efficiency of the red phosphor.

As described above, it is possible to produce a red phosphor in which the perovskite compound is present on at least a part of the surface of the Mn-activated composite fluoride, or a red phosphor in which the Mn-activated composite fluoride is present on at least a part of the surface of the perovskite compound.

Another aspect of the method for producing a red phosphor according to the present embodiment is, for example, a method of adding the perovskite compound in the process of producing the Mn-activated composite fluoride. The method can produce a red phosphor in which the perovskite compound is present in the inner part of the Mn-activated composite fluoride, or a red phosphor in which the Mn-activated composite fluoride is present in the inner part of the perovskite compound.

For example, first, the perovskite compound is dissolved or dispersed in a hydrogen fluoride solution in which the Mn-activated composite fluoride is dissolved. Next, a solid substance containing no element Mn is added to the hydrogen fluoride solution containing the Mn-activated composite fluoride and the perovskite compound.

As described above, the solubility of the Mn-activated composite fluoride decreases as the solid substance dissolves. As a result, the Mn-activated composite fluoride is precipitated. The perovskite compound is incorporated during the precipitation process of the Mn-activated composite fluoride.

As a result, a red phosphor in which the perovskite compound is present in the inner part of the Mn-activated composite fluoride can be produced. Alternatively, a raw material containing the element L, the element M, and the element Mn is dissolved or dispersed in a hydrogen fluoride solution. Next, a solution in which the perovskite compound is dissolved is added to the hydrogen fluoride solution containing the raw material.

As described above, a red phosphor in which the Mn-activated composite fluoride is present in the inner part of the perovskite compound can be produced. The ratio between the Mn-activated composite fluoride and the perovskite compound is not particularly limited, and can be appropriately set according to the amount of raw materials to be used, the application of the red phosphor, and the required performance based on the application.

Others

The method for producing the Mn-activated composite fluoride, which is a raw material of the red phosphor, is not particularly limited, and a known method can be adopted. Examples of the method include a method in which compounds containing the constituent element of the Mn-activated composite fluoride are dissolved in a hydrofluoric acid solution, mixed, and subjected to reactive crystallization (see H. D. Nguyen, C. C. Lin, R. S. Liu, Angew. Chem. 54, 37, p. 10866 (2015)), a method in which compounds containing the constituent element of the Mn-activated composite fluoride are entirely dissolved or dispersed in a hydrofluoric acid solution, and further evaporated and concentrated for precipitation (see JP 2009-528 429 A), and a method in which compounds containing the constituent element of the Mn-activated composite fluoride is sequentially dissolved in a hydrofluoric acid solution, a solid of one of the manganese-free constituent elements of the Mn-activated composite fluoride is added thereto, and crystals of $K_2SiF_6:Mn^{4+}$ are precipitated, filtered, and dried (see WO 2015/093430 A1).

EXAMPLES

The present invention will be described in detail by way of Examples, but the present invention is not limited to the following Examples without departing from the scope of the present invention.

Formation of Mn-Activated Complex Fluoride

An Mn-activated complex fluoride was synthesized by the following method in accordance with the method mentioned in H. D. Nguyen, C. C. Lin, R. S. Liu, Angew. Chem. Volume 54, 37, p. 10862(2015).

First, 35 ml of a 48 % by mass hydrofluoric acid solution was charged in a PFA container having an internal volume of 0.1 L. Next, while stirring the hydrofluoric acid solution, 1.2 g of $SiO_2$ was added and dissolved. Further, 0.3 g of $K_2MnF_6$ was added to this solution and dissolved.

Subsequently, 3.5 g of KF was slowly added to the solution over 15 minutes to obtain crystals. The thus obtained crystals were washed with a 20 % by mass hydrofluoric acid solution and acetone, and then dried at 70 °C for 6 hours. As a result, $K_2SiF_6:Mn^{4+}$ as a Mn-activated complex fluoride was obtained.

Example 1

Potassium magnesium fluoride was synthesized by the following method in accordance with the method described in RAJAMANI NAGARAJAN, Bull. Mater. Sci., Vol. 32, No. 6, December 2009, pp. 583 -587.

First, 10 g of magnesium chloride was added to and dissolved in 100 mL of anhydrous methanol (dehydrated solvent). To the solution was added 18.3 g of potassium fluoride. Potassium fluoride and magnesium chloride were adjusted in a molar ratio of 3 : 1. Furthermore, the resulting solution was stirred for 120 minutes and then filtered off, and the filtrate was washed with ethanol. After washed, the filtrate was further washed with acetone. The obtained solid was dried at a drying temperature of 105 °C under a nitrogen atmosphere. As described above, 11.5 g of a white solid (perovskite compound) was obtained.

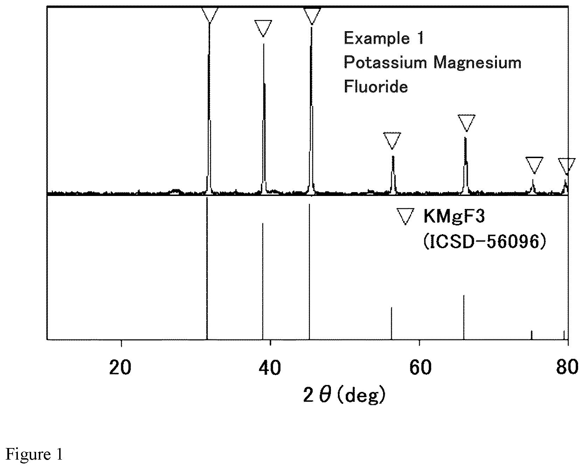

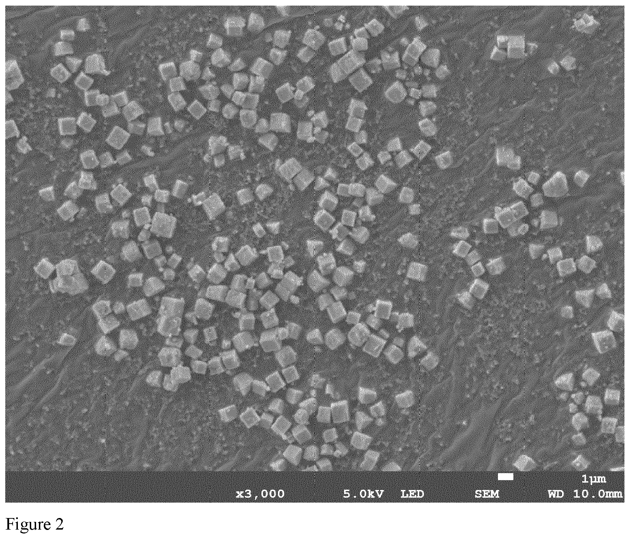

The obtained white solid was analyzed by X-ray diffraction method (XRD), and as shown in FIG. 1, peaks coincident with the reference (ICSD-56096) of potassium magnesium fluoride ($KMgF_3$) were observed. FIG. 1 is a graph showing an X-ray diffraction pattern of $KMgF_3$ according to Example 1. In addition, the white solid was observed with a scanning electron microscope (SEM). As a result, as shown in FIG. 2, it was confirmed from the observation image that the white solid had a 1 $\mu$m cubic crystal structure. FIG. 2 is a SEM photograph of the white solid.

Next, 2 g of potassium magnesium fluoride ($KMgF_3$) was added to 73 g of isopropyl alcohol as a solvent, and the mixture was stirred for 5 minutes to prepare a suspension. Furthermore, while the suspension was stirred, 20 g of the $K_2SiF_6:Mn^{4+}$ was added thereto, and the resulting mixture was further stirred for 10 minutes.

After completion of stirring, the suspension was allowed to stand for 10 minutes, and the dispersed solid was precipitated. Thereafter, suction filtration was performed to recover the filtrate. Furthermore, after isopropyl alcohol was added to the filtrate, suction filtration was performed again to remove the supernatant, and this operation was repeated to wash the filtrate. The washed filtrate was recovered and dried at a drying temperature of 105 °C under a nitrogen atmosphere to evaporate isopropyl alcohol.

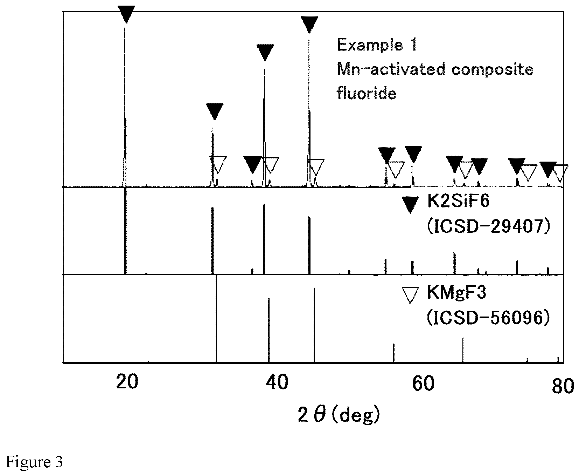

As described above, the red phosphor according to Example 1 was produced. The obtained red phosphor was analyzed by X-ray diffraction method (XRD), and as shown in FIG. 3, peaks coincident with the reference (ICSD-29407) of $K_2SiF_6$, which is the mother crystal of the Mn-activated composite fluoride, and the reference (ICSD-56096) of potassium magnesium fluoride were observed.

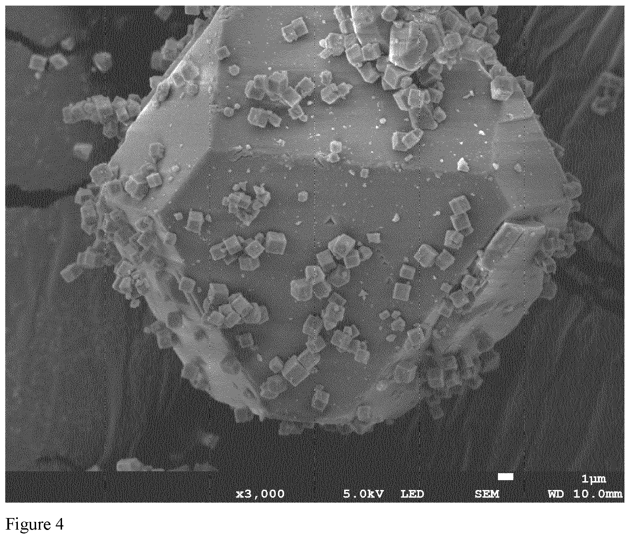

FIG. 3 is a graph showing an X-ray diffraction pattern of a red phosphor according to Example 1. The red phosphor was observed with a scanning electron microscope (SEM). As a result, as shown in FIG. 4, it was confirmed

that $KMgF_3$ having a 1 $\mu$m cubic crystal structure was attached to the surface of the Mn-activated composite fluoride. FIG. 4 is an SEM photograph of the red phosphor.

Example 2

In this example, the isopropyl alcohol used in Example 1 was changed to pure water. The red phosphor according to Example 2 was produced in the same manner as in Example 1 except for the above.

Example 3

In this example, the isopropyl alcohol used in Example 1 was changed to a hydrofluoric acid having a concentration of 1 mass%. The red phosphor according to Example 3 was produced in the same manner as in Example 1 except for the above.

Example 4

In this example, the isopropyl alcohol used in Example 1 was changed to a hydrofluoric acid having a concentration of 43 mass%. In addition, the addition amount of potassium magnesium fluoride was changed from 2 g to 0.12 g. The red phosphor according to Example 4 was produced in the same manner as in Example 1 except for the above.

Example 5

In this example, the isopropyl alcohol used in Example 1 was changed to a hydrofluoric acid having a concentration of 43 mass%. In addition, the addition amount of potassium magnesium fluoride was changed from 2 g to 0.02 g. The red phosphor according to Example 5 was produced in the same manner as in Example 1 except for the above.

Example 6

In this example, potassium magnesium fluoride was changed to a sodium magnesium fluoride ($NaMgF_3$) as the perovskite compound. The red phosphor according to Example 6 was produced in the same manner as in Example 4 except for the above.

Comparative Example 1

In the comparative example, the above-described $K_2SiF_6$:$Mn^{4+}$ was used as a red phosphor.

Evaluation of Red Phosphor

The red phosphors according to Examples 1 to 6 and Comparative Example 1 were evaluated by the methods mentioned below.

Evaluation of Optical Properties of Red Phosphor

In order to evaluate the optical properties of each of the red phosphors of Examples 1 to 6 and Comparative Example 1, the absorptivity and internal quantum efficiency of each red phosphor were determined.
The absorptivity and the internal quantum efficiency were measured using a quantum efficiency measurement system (Trade name: QE-2000; manufactured by Otsuka Electronics Co., Ltd.). That is, the red phosphor samples of Examples 1 to 6 and Comparative Example 1 were packed in a powder measurement cell and measured, respectively. As a result, the red phosphors of Examples 1 to 6 had an absorptivity of 62 %, 68 %, 67 %, 72 %, 73 %, and 72 % in this order, and all of them had an internal quantum efficiency of 90 %. On the other hand, the red phosphor according to Comparative Example 1 had an absorptivity of 72 % and an internal quantum efficiency of 90%.

Evaluation of Durability of Red Phosphor

The durability test was performed as follows. First, 0.3 g of each of the red phosphors of Examples 1 to 6 or Comparative Example 1 was placed in a PFA tray, which was set in a thermo-hygrostat controlled at a temperature of 85 °C and a relative humidity of 85 %, followed by storage for 64 hours and 232 hours. Then, the absorptivity and internal quantum efficiency were determined by the above-mentioned methods, respectively.

Furthermore, an index of the durability of the red phosphor under high-temperature and high-humidity environments was calculated from the values of the internal quantum efficiency before and after the durability test of each red phosphor, based on the following mathematical formula (3). The results are shown in Table 1.

(Durability index) = (internal quantum efficiency after durability test)/internal quantum efficiency before durability test) $\times$ 100

Note that "after endurance test" in mathematical formula (3) means the case after storage for 64 hours under an environment of a temperature of 85 °C and a relative humidity of 85 %, and the case after storage for 232 hours under the same environment.

Results

As shown in Table 1, it was found that the red phosphors of Examples 1 to 6, in which the perovskite compound was present on the surface of the Mn-activated composite fluoride, had a lower change rate in a high-temperature and high-humidity environment and improved durability as compared with the red phosphor of Comparative Example 1, in which the perovskite compound was not contained.

Table 1

| | Perovskite compound | Perovskite compound Mn-activated composite fluoride | Solvent | Indication of durability (%) | |
|---|---|---|---|---|---|
| | | | | 64 hr | 232 r |
| Example 1 | KMgF3 | 0.1 | IPA | 91 | 90 |
| Example 2 | KMgF$_3$ | 0.1 | Pure Water | 91 | 89 |
| Example 3 | KMgF3 | 0.1 | 1 mass% HF aqueous solution | 91 | 91 |
| Example 4 | KMgF3 | 0.006 | 43 mass% HF aqueous solution | 92 | 92 |
| Example 5 | KMgF3 | 0.001 | 43 mass% HF aqueous solution | 77 | 75 |
| Example 6 | NaMgF3 | 0.006 | 43 mass% HF aqueous solution | 93 | 92 |
| Comparative Example 1 | - | - | 43 mass% HF aqueous solution | 33 | 32 |

**Claims**

1. A red phosphor comprising:

    - an Mn-activated composite fluoride represented by a general formula (1) below; and
    - a perovskite compound represented by a general formula (2) below:

    $$L_2MF_6: Mn^{4+} ... \qquad (1)$$

    where L represents at least one alkali metal element selected from a group consisting of lithium, sodium, potassium, rubidium, and cesium, and M represents at least one tetravalent element selected from a group consisting of silicon, germanium, tin, titanium, zirconium, and hafnium; and

    $$ABX_3 ... \qquad (2)$$

    where A represents at least one selected from a group consisting of lithium, sodium, potassium, rubidium, cesium, silver, indium, gold, thallium, ammonium, primary ammonium, secondary ammonium, tertiary ammonium, and quaternary ammonium, the primary ammonium, the secondary ammonium, the tertiary ammonium, and the quaternary ammonium have an alkyl group having 1 to 10 carbon atoms or an alkyl group having 1 to 10 carbon atoms and having a hetero atom, B represents at least one element selected from a group consisting of magnesium, calcium, barium, zinc, zirconium, strontium, manganese, iron, cobalt, nickel, copper, titanium, vanadium, chromium, mercury, cadmium, tin, lead, strontium, europium, yttrium, beryllium, indium, aluminum, ruthenium, osmium, and antimony, and X represents at least one element selected from a group consisting of fluorine, chlorine, bromine, iodine, and sulfur.

2. The red phosphor according to claim 1,
wherein the perovskite compound represented by the general formula (2) adheres to at least a part of a surface of the Mn-activated composite fluoride represented by the general formula (1) and/or is present in an inner part of the Mn-activated composite fluoride represented by the general formula (1).

3. The red phosphor according to claim 1,
wherein the Mn-activated composite fluoride represented by the general formula (1) adheres to at least a part of a surface of the perovskite compound represented by the general formula (2) and/or is present in an inner part of the perovskite compound represented by the general formula (2).

4. The red phosphor according to any one of claims 1 to 3,
wherein the perovskite compound represented by the general formula (2) has an average particle size D50 of 0.002 $\mu$m to 20 $\mu$m in a laser diffraction scattering method.

5. The red phosphor according to any one of claims 1 to 4,
wherein the Mn-activated composite fluoride represented by the general formula (1) and the perovskite compound represented by the general formula (2) are contained in a content ratio of 10 : 90 to 99.999 : 0.001 on a mass basis.

6. A method for producing a red phosphor,
the method comprising a step of contacting a Mn-activated composite fluoride represented by a general formula (1) below and a perovskite compound represented by a general formula (2) below with each other in a presence of a solvent:

$$L_2MF_6: Mn^{4+} ... \qquad (1)$$

where L represents at least one alkali metal element selected from a group consisting of lithium, sodium, potassium, rubidium, and cesium, and M represents at least one tetravalent element selected from a group consisting of silicon, germanium, tin, titanium, zirconium, and hafnium; and

$$ABX_3 ... \qquad (2)$$

where A represents at least one selected from a group consisting of lithium, sodium, potassium, rubidium, cesium, silver, indium, gold, thallium, ammonium, primary ammonium, secondary ammonium, tertiary ammonium, and quaternary ammonium, the primary ammonium, the secondary ammonium, the tertiary ammonium, and the quaternary ammonium have an alkyl group having 1 to 10 carbon atoms or an alkyl group having 1 to 10 carbon atoms and having a hetero atom, B represents at least one element selected from a group consisting of magnesium, calcium, barium, zinc, zirconium, strontium, manganese, iron, cobalt, nickel, copper, titanium, vanadium, chromium, mercury, cadmium, tin, lead, strontium, europium, yttrium, beryllium, indium, aluminum, ruthenium, osmium, and antimony, and X represents at least one element selected from a group consisting of fluorine, chlorine, bromine, iodine, and sulfur.

7. The method for producing a red phosphor according to claim 6,
wherein the perovskite compound represented by the general formula (2) has an average particle size D50 of 0.002 $\mu$m to 20 $\mu$m in a laser diffraction scattering method.

8. The method for producing a red phosphor according to claim 6 or 7,
wherein, in the red phosphor obtained by contacting the Mn-activated composite fluoride represented by the general formula (1) and the perovskite compound represented by the general formula (2) with each other, the Mn-activated composite fluoride and the perovskite compound are contained in a content ratio of 10 : 90 to 99.999 : 0.001 on a mass basis.

9. The method for producing a red phosphor

according to any one of claims 6 to 8,
wherein the solvent is water, an organic solvent, a mixed solvent thereof, or an acidic solvent thereof.

**10.** The method for producing a red phosphor

according to any one of claims 6 to 9,
wherein a mixing ratio of the solvent to the Mn-activated composite fluoride represented by the general formula (1) and the perovskite compound represented by the general formula (2) is in a range of 2 : 1 to 100 : 1 on a mass basis.

**11.** The method for producing a red phosphor according to claim 9 or 10,
wherein the acidic solvent is an acidic solvent containing hydrogen fluoride, and the acidic solvent containing the hydrogen fluoride has a concentration of the hydrogen fluoride of 1 mass% to 70 mass% with respect to a total mass of the acidic solvent.

Figure 1

Figure 2

Figure 3

Figure 4

**INTERNATIONAL SEARCH REPORT**

| International application No. |
| --- |
| **PCT/JP2022/030651** |

## A. CLASSIFICATION OF SUBJECT MATTER

*C09K 11/08*(2006.01)i; *C09K 11/61*(2006.01)i; *C09K 11/66*(2006.01)i; *C09K 11/67*(2006.01)i
FI:   C09K11/08 G; C09K11/08 A; C09K11/66; C09K11/67; C09K11/61

According to International Patent Classification (IPC) or to both national classification and IPC

## B. FIELDS SEARCHED

Minimum documentation searched (classification system followed by classification symbols)

C09K11/08; C09K11/61; C09K11/66; C09K11/67

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)JSTPlus/JMEDPlus/JST7580 (JDreamIII)

## C. DOCUMENTS CONSIDERED TO BE RELEVANT

| Category* | Citation of document, with indication, where appropriate, of the relevant passages | Relevant to claim No. |
| --- | --- | --- |
| X | JP 2020-530501 A (CURRENT LIGHTING SOLUTIONS LLC) 22 October 2020 (2020-10-22)<br>      claims, paragraphs [0016], [0047]-[0055], etc. | 1-3, 5-6, 8-11 |
| A | claims, paragraphs [0016], [0047]-[0055], etc. | 4, 7 |
| A | JP 2018-087323 A (NICHIA KAGAKU KOGYO KK) 07 June 2018 (2018-06-07)<br>      claims, examples, etc. | 1-11 |
| A | JP 2018-012825 A (SHINETSU CHEMICAL CO) 25 January 2018 (2018-01-25)<br>      claims, paragraphs [0029]-[0046], etc. | 1-11 |
| A | WO 2015/129741 A1 (DENKA COMPANY LTD) 03 September 2015 (2015-09-03)<br>      claims, paragraphs [0033]-[0069], etc. | 1-11 |
| A | JP 2017-186524 A (NICHIA KAGAKU KOGYO KK) 12 October 2017 (2017-10-12)<br>      claims, examples, etc. | 1-11 |
| A | JP 2015-044951 A (NICHIA KAGAKU KOGYO KK) 12 March 2015 (2015-03-12)<br>      claims, examples, etc. | 1-11 |

☐ Further documents are listed in the continuation of Box C.      ☑ See patent family annex.

| | |
| --- | --- |
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **14 September 2022** | **27 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/030651**

| Patent document cited in search report | | | Publication date (day/month/year) | Patent family member(s) | | | Publication date (day/month/year) |
|---|---|---|---|---|---|---|---|
| JP | 2020-530501 | A | 22 October 2020 | WO | 2019/032909 | A1 | |
| | | | | claims, paragraphs [0016], [0047]-[0055], etc. | | | |
| | | | | US | 2019/0048258 | A1 | |
| | | | | EP | 3628053 | A | |
| | | | | CN | 111133077 | A | |
| JP | 2018-087323 | A | 07 June 2018 | US | 2018/0142147 | A1 | |
| | | | | claims, examples | | | |
| | | | | EP | 3336157 | A1 | |
| JP | 2018-012825 | A | 25 January 2018 | US | 2017/0107425 | A1 | |
| | | | | claims, paragraphs [0059]-[0105], etc. | | | |
| | | | | KR | 10-2017-0044043 | A | |
| WO | 2015/129741 | A1 | 03 September 2015 | US | 2017/0012181 | A1 | |
| | | | | claims, paragraphs [0064]-[0157], etc. | | | |
| | | | | CN | 106029832 | A | |
| | | | | KR | 10-2016-0127066 | A | |
| JP | 2017-186524 | A | 12 October 2017 | US | 2017/0283695 | A1 | |
| | | | | claims, examples | | | |
| JP | 2015-044951 | A | 12 March 2015 | US | 2015/0061488 | A1 | |
| | | | | claims, examples | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009528429 A
- WO 2015093430 A1
- JP 2018012813 A
- JP 2017141447 A

**Non-patent literature cited in the description**

- **H. D. NGUYEN ; C. C. LIN ; R. S. LIU.** *Angew. Chem.,* 2015, vol. 54 (37), 10862
- **RAJAMANI NAGARAJAN.** *Bull. Mater. Sci.,* December 2009, vol. 32 (6), 583-587
- **H. D. NGUYEN ; C. C. LIN ; R. S. LIU.** *Angew. Chem.,* 2015, vol. 54 (37), 10866
- **RAJAMANI NAGARAJAN.** *Bull. Mater. Sci.,* December 2009, vol. 32 (6), 583-587